# EUROPÄISCHE PATENTSCHRIFT

(11) **EP 0 790 446 B1**
(45) Veröffentlichungstag und Bekanntmachung des Hinweises auf die Patenterteilung: **30.10.2002**
(21) Anmeldenummer: 97101446.9
(22) Anmeldetag: 30.01.1997
(51) Int. Cl.: F16J 15/34

(54) **Gleitringdichtungsanordnung**
Mechanical seal arrangement
Garniture mécanique d'étanchéité

(30) Priorität: 15.02.1996 DE 29602685 U
(43) Veröffentlichungstag der Anmeldung: 20.08.1997
(73) Patentinhaber: Burgmann Dichtungswerke GmbH & Co. KG, 82515 Wolfratshausen (DE)
(72) Erfinder: Schrüfer, Andreas, 82515 Wolfratshausen (DE); Ittner, Walter, 82538 Geretsried (DE); Svejkovsky, Reinhard, 82538 Geretsried (DE); Schöpf, Andreas, 82065 Baierbrunn (DE); Ziegenbein, Dieter, 86356 Neusäss (DE)
(74) Vertreter: Schmidt, Horst, Dr.

(56) Entgegenhaltungen:
- GB-A- 2 268 235
- GB-A- 2 286 020
- US-A- 4 466 619
- US-A- 5 217 234

## Beschreibung

Die Erfindung betrifft eine Gleitringsdichtungsanordnung gemäss dem Oberbegriff des Anspruches 1 und insbesondere eine Anordnung mit positiver Kühlung und Schmierung der Gleitringe mittels einer Puffer- oder Quenchflüssigkeit.

Eine gattungsgemässe Anordnung ist aus der GB-A-2 286 020 bekannt. Bei dieser Anordnung hat der exzentrische Ring- oder Druckraum eine axiale Abmessung, die sich nur unwesentlich von der Öffnungsweite von Ein- und Auslassöffnungen für die Pufferflüssigkeit unterscheidet. Aufgrund dessen ist die Förderleistung des exzentrischen Ringraumes gering und die Kühl- und Schmierwirkung der Pufferflüssigkeit auf die Gleitringpaarung entsprechend eingeschränkt. In der US-A-3 746 349 ist zwar ein axial verlängerter exzentrischer Ringoder Druckraum bei einer Anordnung der vorliegenden Art vorgesehen. Versuche, die im Rahmen der vorliegenden Erfindung durchgeführt wurden, haben jedoch gezeigt, dass mit dieser bekannten Massnahme noch keine wesentliche Verbesserung der Kühl- und Schmierwirkung erzielt wird, da durch Zentripetalkräfte eine Ansammlung von aus der Pufferflüssigkeit freigegebenen Gasen in Bereichen des Ringraumes auftreten kann, was eine entsprechende Querschnittsverengung des Ringraumes zur Folge hat, so dass u. U. eine Strömung der Pufferflüssigkeit längs des Ringraumes gänzlich unterbunden wird. Zwar wird ferner in der US-A-4466619 vorgeschlagen, längliche Ausnehmungen in der Oberfläche des rotierenden Bauteils einzubringen, um eine Pumpwirkung auf eine Pufferflüssigkeit in einem zylindrischen Ringraum auszuüben, doch ist hierin ledigliche eine funktionsgleiche Alternative zu einer Pumpwirkung mittels eines exzentrischen Ringraums zu sehen.

Der Erfindung liegt die Aufgabe zugrunde, bei einer Gleitringdichtungsanordnung der gattungsgemässen Art eine verbesserte Strömung der Pufferflüssigkeit und damit eine verbesserte Kühl- und Schmierwirkung zu schaffen, indem Verstopfen des exzentrischen Ringraumes durch aus der Pufferflüssigkeit abgeschiedene Gase vermieden oder wenigstens weitestgehend herabgesetzt werden.

Zur Lösung dieser Aufgabe wird auf den kennzeichnenden Teil des Anspruches 1 verwiesen. Die förderwirksamen Ausnehmungen im rotierenden Bauteil, die, da es sich hierbei nicht um den rotierenden Gleitring handelt, problemlos und ohne Schwächung des rotierenden Gleitringes vorgesehen werden können, bewirken nicht nur, dass die Pufferflüssigkeit zwischen der Ein- und Auslassöffnung des Ringraumes in eine Zwangsströmung versetzt wird, wobei dies durch die exzentrische Ausbildung des Ringraumes weiter unterstützt wird. Darüber hinaus stellen die förderwirksamen Ausnehmungen vertiefte Bereiche im rotierenden Bauteil dar, in denen sich aus der Pufferflüssigkeit gelöstes Gas aufgrund von Zentripetalkräften bevorzugt ansammelt, um zur Auslassöffnung und von dort nach aussen transportiert werden zu können. Die Ansammlung von Gasblasen an den Engstellen des Ringraumes wird hierdurch wirksam vermieden. Ausserdem haben die Ausnehmungen eine Aufteilung der Flüssigkeitsströmung zur Folge, indem die rein umfängliche Strömung längs des Ringraumes axial gefächert wird, was sich vorteilhaft auf die Kühlung und Schmierung der Gleitringe auswirkt. Zwar ist es aus E. Mayer, Axiale Gleitringdichtungen, VDI-Verlag, Düsseldorf, 1966, S. 157 bekannt, in einem stationären Bauteil eine exzentrische Druckkammer zum Pumpen einer Pufferflüssigkeit auszubilden, doch stellt diese Teil einer Pumpeinrichtung dar, die nach Art einer Kreiselpumpe funktioniert, indem sie mit einem konzentrischen am rotierenden Gleitring zusätzlich vorgesehenen Pumpring mit schaufelartigen Pumpelementen zusammenwirkt. Die Anordnung des Pumpringes am rotierenden Gleitring kann dessen Stabilität beeinträchtigen, und ferner können unerwünschte Verwirbelungen der Pufferflüssigkeit in Bereichen der Gleitringdichtungsanordnung auftreten, die eine gute Kühlund Schmierwirkung erfordern. Bei der vorliegenden Erfindung können die förderwirksamen Ausnehmungen in einfacher Weise als langgestreckte, umfänglich geschlossene Nuten oder Ausnehmungen ausgebildet sein. Der rotierende Gleitring braucht daher grundsätzlich nicht modifiziert werden.

Vorzugsweise haben die förderwirksamen Ausnehmungen eine axiale Abmessung, die wenigstens gleich der axialen Abmessung des Ringraumes ist, wobei höchstvorzugsweise die Ausnehmungen axial über den Ringraum hinaus verlängert sind, und stellen nach ihrer Funktion trogartige Gebilde dar. Es wurde festgestellt, dass durch diese Massnahmen ein wirksamer Beitrag zur Verhinderung von Ansammlungen von Gasblasen im Ringraum geleistet wird. Gemäss einer anderen bevorzugten Weiterbildung der Erfindung sollte der Durchlassquerschnitt einer Ein- bzw. Auslassöffnung für die Pufferflüssigkeit in bzw. aus dem Ringraum wenigstens im wesentlichen gleich dem Durchlassquerschnitt einer mit der Ein- bzw. Auslassöffnung in Verbindung stehenden Ein- bzw. Auslasspassage im stationären Bauteil sein. Dadurch kann die Förderleistung der Kombination aus exzentrischem Ringraum und förderwirksamen Ausnehmungen wesentlich verbessert werden, da es sich herausgestellt hat, dass in Engstellen an den Ein- und Auslassöffnungen ein weiteres Merkmal zu sehen ist, das eine Strömung der Pufferflüssigkeit längs des Ringraumes beeinträchtigen kann. Vorteilhafterweise kann die Gleitringdichtungsanordnung nach der Erfindung als montagefertige Einschubeinheit ausgebildet sein. Bezüglich anderer Weiterbildungen der Erfindung wird auf die Ansprüche verwiesen.

Die Erfindung wird nachfolgend anhand einer Ausführungsform und der Zeichnung näher erläutert. Es zeigen:
Fig. 1 in längsgeschnittener teilweise fragmentarischer Ansicht eine erfindungsgemäss aufgebaute Gleitringdichtungsanordnung nach Montage bei einem abzudichtenden Gehäuseteil, und
Fig. 2 eine schematische Ansicht zur Erläuterung eines Details der Erfindung.

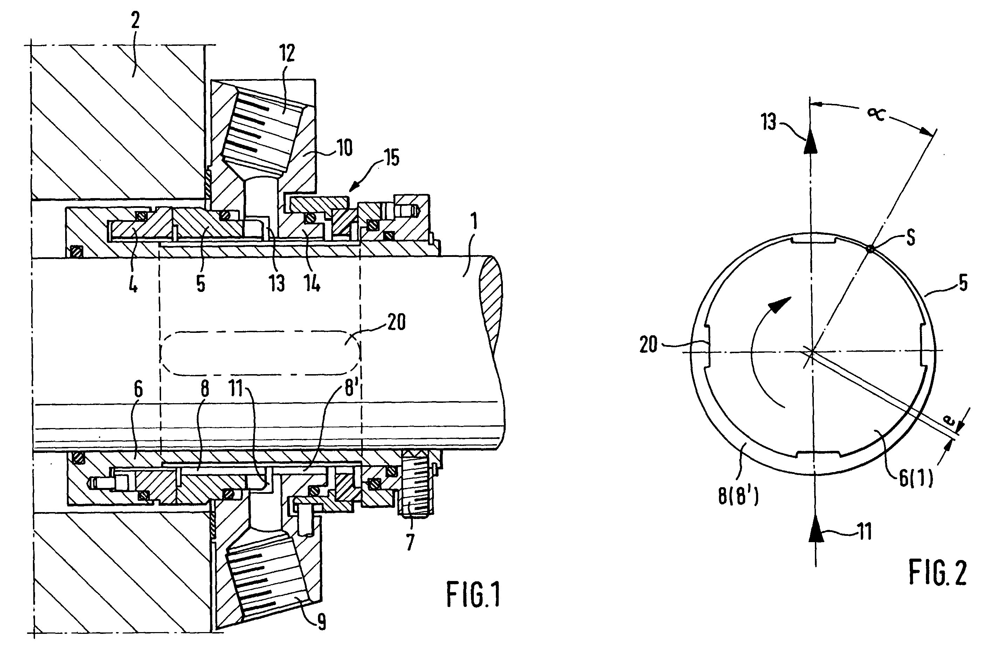

In Fig. 1 betrifft das Bezugszeichen 1 eine Welle, die durch eine abzudichtende Bohrung eines Gehäuses 2 hindurchgeführt ist. Die Gleitringdichtungsanordnung umfasst ein Paar zusammenwirkender Gleitringe 4, 5, von denen der Gleitring 4 von einer auf der Welle 1 aufgesetzten Buchse 6 gehalten ist, die durch eine geeignete Einrichtung, z.B. eine Schraubklemmanordnung 7, drehfest gegenüber der Welle 1 fixiert ist, so dass der Gleitring 4 die Drehbewegung der Welle 1 mitmacht. Der andere Gleitring 5 ist drehunbeweglich gegenüber einem stationären Bauteil 10 gehalten, welcher am Gehäuse 2 befestigt, z.B. angeschraubt sein kann.

Die Gleitringe 4, 5 haben zusammenwirkende radiale Dichtflächen, zwischen denen bei Betrieb ein Dichtspalt gebildet wird, um einen Raum an einer Umfangsseite des Dichtspaltes gegenüber einem Raum an der anderen Umfangsseite des Dichtspaltes abzudichten. Eine Vorspanneinrichtung (nicht gezeigt) kann vorgesehen sein, um die Gleitringe 4, 5 gegeneinander vorzuspannen, so dass bei Stillstand der Welle 1 die Dichtflächen in abdichtender Berührung miteinander gehalten sind. Im übrigen ist der vorbeschriebene grundsätzliche Aufbau der Gleitringdichtungsanordnung dem Fachmann bekannt, so dass sich die Beschreibung weiterer Details erübrigt.

Zwischen der inneren Umfangsfläche des drehunbeweglichen Gleitringes 5 und der äusseren Umfangsfläche der Buchse 6 ist ein exzentrischer Ringraum 8 ausgebildet, in den eine Pufferflüssigkeit eingeführt werden kann. Dazu ist im stationären Bauteil 10 eine Einlasspassage 9 vorgesehen, die mit einer in den Ringraum 8 ausmündenden Einlassöffnung 11 in Verbindung steht. Die Einlassöffnung 11 kann teilweise den drehunbeweglichen Gleitring 5 und teilweise einen die Buchse 6 umgebenden Bohrungsbereich 14 des stationären Bauteiles 10 durchsetzen.

An einer zur Einlasspassage 9 vorzugsweise diametral gegenüberliegenden Stelle des stationären Bauteiles 10 ist eine Auslasspassage 12 für die Pufferflüssigkeit vorgesehen, die mit einer Auslassöffnung 13 in Verbindung steht, die in den Ringraum 8 einmündet, so dass eine über die Einlasspassage 9 und die Einlassöffnung 11 in den Ringraum 8 eingeführte Pufferflüssigkeit nach Durchströmumg des Ringraumes 8 an der diametral gegenüberliegenden Stelle über die Auslassöffnung 13 und die Auslasspassage 12 nach aussen, z.B. zum Wärmetausch mit einem Kühlaggregat, abgeführt werden kann.

Der Ringraum 8 hat eine sich von der Stelle der Einlassöffnung 11 zur Stelle der Auslassöffnung 13 stetig verringernde radiale Weite oder Abmessung, indem der Mittelpunkt einer Bohrung im drehunbeweglichen Gleitring 5 um ein geeignetes Mass "e" exzentrisch gegenüber dem Mittelpunkt der Buchse 6 angeordnet ist, wie dies in Fig. 2 gezeigt ist. Infolge davon hat der Ringraum 8 eine exzentrische Querschnittskonfiguration. Die Ein- und Auslassöffnungen 11, 13 sind an oder nahe bei den Abschnitten des Ringraumes 8 mit der maximalen bzw. minimalen radialen Abmessung angeordnet, so dass eine von der Einlassöffnung 11 zur Auslassöffnung 13 bewegte Flüssigkeit infolge des sich kontinuierlich verengenden Durchlassquerschnittes des Ringraumes 8 unter Druck gesetzt und so eine Zwangsströmung bewirkt wird, wenn sich die Buchse 6, wie es in Fig. 2 durch den Pfeil angedeutet ist, vom Bereich der Einlassöffnung 11 zum Bereich der Auslassöffnung 13 dreht.

Anstelle einer diametralen Anordnung der Ein- und Auslassöffnungen 11, 13 kann auch eine andere geeignete winkelmässige Beziehung zwischen diesen Öffnungen vorgesehen sein. Wie in Fig. 2 gezeigt ist, kann insbesondere die Auslassöffnung 13 in Bezug auf den Abschnitt S des Ringraumes 8 mit der minimalen radialen Abmessung in Gegendrehrichtung der Welle 1 bzw. Buchse 6 um einen Winkel α versetzt angeordnet sein. Der Winkel α kann vorzugsweise zwischen etwa 15° und 90° betragen.

Erfindungsgemäss wurde festgestellt, dass die durch die exzentrische Ausbildung des Ringraumes 8 hervorgerufene Strömung in vielen Fällen für eine ausreichende Kühl- und Schmierwirkung der Pufferflüssigkeit auf die Gleitringpaarung und die übrigen Teile der Gleitringdichtungsanordnung nicht ausreicht. Darüber hinaus wurde festgestellt, dass sich im Ringraum 8 leicht Gas ansammeln kann, das in der Pufferflüssigkeit in gelöster Form vorhanden ist. Gasblasen können sich unter dem Einfluss von Zentripetalkräften längs der Buchse 6 ansammeln und den Durchlassquerschnitt des Ringraumes 8 unter Umständen soweit verengen, dass eine Strömung der Pufferflüssigkeit wesentlich herabgesetzt oder ggf. sogar gänzlich unterbunden wird.

Erfindungsgemäss sind in der äusseren Umfangsfläche der Buchse 6 förderwirksame langgestreckte nutförmige Ausnehmungen 20 vorgesehen, die sich in gleichem Winkelabstand voneinander mit ihren längeren Achsen parallel zur Mittellängsachse der Buchse 6 bzw. Welle 1 erstrecken. Insbesondere hat jede nutförmige Ausnehmung 20 eine axiale Abmessung, die wenigstens gleich der axialen Abmessung des Ringraumes 8 bzw. des drehunbeweglichen Gleitringes 5 ist, vorzugsweise über die axiale Abmessung des Ringraumes 8 bzw. drehunbeweglichen Gleitringes 5 beidseitig verlängert ist, jedoch innerhalb der axialen Begrenzungen der Buchse 6 verbleibt, so dass bei Betrachtung in Umfangs- und Axialrichtung der Buchse 6 ein ringsum geschlossenes Gebilde vorliegt.

Darauf hinzuweisen ist, dass bei der gezeigten bevorzugten Ausführungsform der Erfindung der Ringraum 8 einen Abschnitt 8' umfasst, der zwischen der inneren Umfangsfläche des Bohrungsbereiches 14 des stationären Bauteiles 10 und der äusseren Umfangsfläche der Buchse 6 definiert ist. In diesem Fall haben die nutförmigen Ausnehmungen 20 eine axiale Abmessung, die wenigstens gleich der axialen Abmessung des Ringraumes 8, einschliesslich des Abschnittes 8', vorzugsweise etwas grösser ist.

Es versteht sich, dass die Anzahl und Konfiguration der Ausnehmungen 20 nicht auf die in Fig. 1 und 2 gezeigten Verhältnisse beschränkt ist. Vielmehr können mehr oder weniger derartige Ausnehmungen vorgesehen sein, und können diese auch eine andere geeignete Konfiguration haben. Auch könnte anstelle von nur einer Ausnehmung 20 längs eines axialen Bereiches der Buchse 6 eine Vielzahl von z.B. kreisförmigen Ausnehmungen axial hintereinander angeordnet sein, die vorzugsweise miteinander in Verbindung stehen. Ferner kann der Querschnitt der Ausnehmungen in einer radialen Ebene zur Erhöhung ihrer Förderwirksamkeit anders als rechteckförmig, z.B. dreieckförmig ausgebildet sein.

Die Ausnehmungen 20 bewirken, dass die über die Einlassöffnung 11 in den Ringraum 8 eingeführte Pufferflüssigkeit nicht nur durch Schleppströmung, sondern zusätzlich nach Art eines umfänglich geschlossenen Troges in Richtung auf die Auslassöffnung 13 transportiert wird, so dass eine verstärkte Strömung stattfindet. Ferner werden sich in den Vertiefungen der Ausnehmungen 20 aufgrund von Zentripetalkräften aus der Pufferflüssigkeit abgeschiedene Gasblasen bevorzugt ansammeln, ohne den Durchlassquerschnitt des Ringraumes 8 zu verengen. In den Ausnehmungen 20 angesammelte Gasblasen werden bei der Drehung der Buchse von der Ein- zur Aulassöffnung 11, 13 infolge des exzentrischen Ringraumes 8 verdichtet und zusammen mit der Pufferflüssigkeit über die Auslassöffnung 13 und die Auslasspassage 12 nach aussen abgeleitet.

Mit dem Bezugszeichen 15 in Fig. 1 ist eine zusätzliche Gleitringpaarung angedeutet, die den Ringraum im Bereich seines von der einen Gleitringpaarung 4, 5 abgewandten anderen axialen Endes gegenüber der Umgebung abdichtet.

Die Gleitringdichtungsanordnung kann, wie Fig. 1 zeigt, als sämtliche vorerwähnten Merkmale aufweisende montagefertige Einschubeinheit oder sog. Patrone zur Anordnung in der Bohrung des Gehäuses 1 ausgebildet sein.

Obschon die Erfindung vorausgehend anhand einer Ausführungsform mit in einer auf der Welle aufgesetzten Buchse vorgesehenen förderwirksamen Ausnehmungen beschrieben wurde, versteht es sich, dass es sich bei dem die Ausnehmungen enthaltenden Bauteil auch um die Welle selbst handeln kann.

## Patentansprüche

1. Gleitringdichtungsanordnung zur Abdichtung eines rotierenden gegenüber einem stationären Bauteil, mit wenigstens einem Paar zusammenwirkender abdichtender Gleitringe (4,5), von denen einer drehunbeweglich gegenüber dem stationären und der andere zur gemeinsamen Drehung mit dem rotierenden Bauteil montierbar ist, wobei zwischen dem rotierenden Bauteil und dem drehunbeweglichen Gleitring ein Ringraum (8) definiert ist, dessen radiale Abmessung zwischen einem Bereich mit minimaler und einem umfänglich dazu versetzten Bereich mit maximaler Abmessung divergiert, und mit einer Einrichtung (9,11;12,13) zum Einlass einer Pufferflüssigkeit in den Ringraum an oder nahe bei dessen Bereich mit maximaler radialer Abmessung und zum Auslass der Pufferflüssigkeit aus dem Ringraum an oder nahe bei dessen Bereich mit minimaler radialer Abmessung, **gekennzeichnet durch** wenigstens eine längs wenigstens eines axialen, zum Ringraum (8) ausgerichteten Bereiches im rotierenden Bauteil (1) vorgesehene förderwirksame Ausnehmung (20) zur Unterstützung einer Strömung der Pufferflüssigkeit längs des Ringraumes von der Ein- zur Auslasseinrichtung (9,11;12,13).

2. Gleitringdichtungsanordnung nach Anspruch 1, **dadurch gekennzeichnet, dass** die Ausnehmung (20) bei Betrachtung in Umfangs- und Axialrichtung des rotierenden Bauteiles (1) eine ringsum geschlossene Ausbildung und eine axiale Abmessung wenigsten gleich der des Ringraumes (8) hat.

3. Gleitringdichtungsanordnung nach Anspruch 1 oder 2, **dadurch gekennzeichnet, dass** die axiale Abmessung des Ringraumes (8) derjenigen des drehunbeweglichen Gleitringes (5) im wesentlichen entspricht.

4. Gleitringdichtungsanordnung nach Anspruch 1, 2 oder 3, **dadurch gekennzeichnet, dass** der Durchlassquerschnitt einer in den Ringraum (8) mündenden Ein- bzw. Auslassöffnung (11,13) für die Pufferflüssigkeit wenigstens im wesentlichen gleich dem Durchlassquerschnitt einer mit der Ein- bzw. Auslassöffnung in Verbindung stehenden Ein- bzw. Auslasspassage (9,12) im stationären Bauteil (10) ist.

5. Gleitringdichtungsanordnung nach einem der vorhergehenden Ansprüche, **dadurch gekennzeichnet, dass** der Ringraum (8) axial über die axiale Abmessung des drehunbeweglichen Gleitringes (5) verlängert ist.

6. Gleitringdichtungsanordnung nach Anspruch 5, **dadurch gekennzeichnet, dass** ein Abschnitt (8') des Ringraumes (8) durch einen Bohrungsbereich (14) des stationären Bauteiles (10) definiert ist.

7. Gleitringdichtungsanordnung nach Anspruch 5, mit zwei axial aneinander angrenzenden Paaren zusammenwirkender Gleitringe, **dadurch gekennzeichnet, dass** der Ringraum (8) durch axial zueinander ausgerichtete Ringraumabschnitte gebildet ist, die durch die angrenzenden drehunbeweglichen Gleitringe der Gleitringpaarungen definiert sind.

8. Gleitringdichtungsanordnung nach einem der vorhergehenden Ansprüche, **dadurch gekennzeichnet, dass** diese als Einschubeinheit ausgebildet ist.

## Claims

1. A mechanical face seal assembly for sealing a rotating member with respect to a stationary member, including at least a pair of cooperating seal rings (4,5), one of said seal rings is mountable in a non-rotating manner with respect to said stationary member and the other for common rotation with said rotating member, between said rotating member and said non-rotating seal ring an annular space (8) being defined, the radial dimension of which varies between a region of minimum radial dimension and a region of maximum radial dimension, said regions being offset circumferentially to each other, and a means (9,11;12,13) for introducing a buffer liquid into said annular space at or adjacent said region having a maximum radial dimension, and for discharging said buffer liquid from said annular space at or adjacent the region thereof having a minimum radial dimension, **characterized by** at least one conveying-effective recess (20) provided in said rotating member (1) along at least an axial portion thereof oriented axially to said annular space for promoting a flow of the buffer liquid along the annular space from the inlet to the outlet means.

2. The mechanical face seal assembly as set forth in claim 1, **characterized in that** on that said recess (20) is closed all around when viewed in peripheral and axial directions, the axial dimension of said recess being at least equal to that of said annular space (8).

3. The mechanical face seal assembly as set forth in claim 1 or 2, **characterized in that** the axial dimension of said annular space (8) essenttially corresponds to that of said non-rotating seal ring (5).

4. The mechanical face seal assembly as set forth in claim 1, 2 or 3, **characterized in that** the flow cross-section of inlet and outlet ports (11,13) for said buffer liquid porting into said annular space (89 is at least essentially equal to the flow cross-section of inlet and outlet passage (9,12) communicating therewith and provided in said stationary member (10).

5. The mechanical face seal assembly as set forth in one of the preceding claims, **characterized in that** said annular space (8) is axially extended beyond the axial dimension of said non-rotating seal ring (5).

6. The mechanical face seal assembly as set forth in claim 5, **characterized in that** a portion (8') of said annular space (8) is defined by a bore portion (14) of said stationary member (10).

7. The mechanical face seal assembly as set forth in claim 5 and having two pairs of adjacent cooperating seal rings, **characterized in that** said annular space (8) is formed of annular spaced sections axially oriented and defined by adjacent non-rotating seal rings of said pairs of seal rings.

8. The mechanical face seal assembly as set forth in one of the preceding claims, **characterized in that** it is formed as a slide-in unit.

## Revendications

1. Agencement d'étanchement à bague coulissante, destiné à étancher un composant en rotation par rapport à un composant stationnaire, comprenant au moins une paire de bagues coulissantes (4, 5) d'étanchéité coopérantes, dont l'une peut être montée de façon immobile en rotation par rapport au composant stationnaire et l'autre peut être montée en vue d'une rotation conjointe avec le composant en rotation, dans lequel une chambre annulaire (8) est définie entre le composant en rotation et la bague coulissante immobile en rotation, la dimension radiale de ladite chambre divergeant entre une région de dimension minimum et une région de dimension maximum déportée de celle-ci en sens périphérique, et comprenant des moyens (9, 11 ; 12, 13) pour l'admission d'un fluide tampon dans la chambre annulaire au niveau ou à proximité de sa région de dimension radiale maximum, et pour l'évacuation du fluide tampon hors de la chambre annulaire au niveau ou à proximité de sa région de dimension radiale minimum, **caractérisé par** au moins un évidement (20) prévu dans le composant en rotation (1) le long d'au moins une zone axiale orientée vers la chambre annulaire (8), présentant un effet de convoyage, pour assister un écoulement du fluide tampon le long de la chambre annulaire depuis les moyens d'admission jusqu'aux moyens d'évacuation (9, 11 ; 12, 13).

2. Agencement d'étanchement à bague coulissante selon la revendication 1, **caractérisé en ce que** l'évidement (20) présente une réalisation fermée sur le pourtour et une dimension axiale au moins égale à celle de la chambre annulaire (8), observé en direction périphérique et en direction axiale du composant en rotation (1).

3. Agencement d'étanchement à bague coulissante selon l'une ou l'autre des revendications 1 et 2, **caractérisé en ce que** la dimension axiale de la chambre annulaire (8) correspond essentiellement à celle de la bague coulissante (5) immobile en rotation.

4. Agencement d'étanchement à bague coulissante selon l'une des revendications 1, 2 ou 3, **caractérisé en ce que** la section de passage d'une ouverture d'entrée ou de sortie (11, 13) débouchant dans la chambre annulaire (8) pour le fluide tampon est au moins essentiellement égale à la section de passage d'un passage d'entrée ou de sortie (9, 12) dans le composant stationnaire (10) en communication avec l'ouverture d'entrée ou de sortie.

5. Agencement d'étanchement à bague coulissante selon l'une des revendications précédentes, **caractérisé en ce que** la chambre annulaire (8) est prolongée axialement au-delà de la dimension axiale de la bague coulissante (5) immobile en rotation.

6. Agencement d'étanchement à bague coulissante selon la revendication 5, **caractérisé en ce qu'**un tronçon (8') de la chambre annulaire (8) est défini par une zone de perçage (14) du composant stationnaire (10).

7. Agencement d'étanchement à bague coulissante selon la revendication 5, comprenant deux paires de bagues coulissantes coopérantes mutuellement adjacentes dans le sens axial, **caractérisé en ce que** la chambre annulaire (8) est formée par des tronçons de chambre annulaire orientés axialement l'un vers l'autre, qui sont définis par les bagues coulissantes immobiles en rotation et juxtaposées des paires de bagues coulissantes.

8. Agencement d'étanchement à bague coulissante selon l'une des revendications précédentes, **caractérisé en ce qu'**il est réalisé sous la forme d'une unité à enfiler.
